# EUROPÄISCHE PATENTSCHRIFT

(11) **EP 0 587 003 B1**
(45) Veröffentlichungstag und Bekanntmachung des Hinweises auf die Patenterteilung: **02.04.1997**
(21) Anmeldenummer: 93113819.2
(22) Anmeldetag: 30.08.1993
(51) Int. Cl.: B65D 30/22, H02G 15/10

(54) **Verfahren zum Vergiessen von Vergussmuffen für elektrische Kabel und Vergussmasse zur Durchführung des Verfahrens**
Method and resin for molded electrical cable connectors
Méthode et résine à sceller des connecteurs de câbles électriques

(30) Priorität: 28.08.1992 DE 4228259; 23.11.1992 DE 4239288
(43) Veröffentlichungstag der Anmeldung: 16.03.1994
(73) Patentinhaber: CELLPACK AG, CH-5610 Wohlen (CH)
(72) Erfinder: Burger,Roland, CH-5603 Staufen (CH)
(74) Vertreter: Allgeier, Kurt

(56) Entgegenhaltungen:
- EP-A- 0 001 564
- EP-A- 0 063 013
- EP-A- 0 380 113
- WO-A-85/01716
- CH-A- 615 130
- CH-A- 667 437
- GB-A- 2 119 391

## Beschreibung

Die Erfindung bezieht sich auf ein Verfahren zum Vergiessen von Vergussmuffen für elektrische Kabel mit einer Zweikomponenten-Vergussmasse, deren getrennt bereitgehaltene Komponenten erst kurz vor Gebrauch vermischt und über die Einfüllöffnungen der Vergussmasse in deren Hohlräume eingeführt wird, sowie eine Vergußmasse und deren Verwendung.

Bei Vergussmuffen für elektrische Kabel, insbesondere mehradrige Fernmeldekabel, kann es sich um Verbindungs-, Abzweig-, Übergangs- oder Endabschlussmuffen oder auch Muffen für Sonderzwecke bei Kabeln handeln, und es ist erforderlich, das Eindringen von Flüssigkeiten, insbesondere Wasser und auch von gasförmigen feuchten Medien mit Sicherheit zu verhindern. Es sind unterschiedliche Dichtungstechniken bekannt und gebräuchlich, um diesen Feuchtigkeitsschutz sicherzustellen. In weitem Umfang wird von der Möglichkeit Gebrauch gemacht, diese Muffen als zweiteilige öffen- und schliessbare Hohlkörper auszubilden, die im geschlossenen Zustand - nach dem Einbringen der Kabel und Herstellen der Kabelverbindungen - mit einer abdichtenden Vergussmasse zu verfüllen.

Zu diesem Zweck sind diese nach Montage der Kabel verschlossenen Muffen mit einer oder mehreren in der Montagelage nach oben offenen Einfüllöffnungen für die Vergussmasse versehen.

Dieses Vergiessen muss mit Sorgfalt durchgeführt werden, so dass sich keine durchgehenden Blasen oder dergl. Hohlräume bilden können, durch welche Flüssigkeit oder Feuchtigkeit an die eventuell freiliegenden blanken Teile der jeweiligen freigelegten Kabel oder Kabelenden gelangen könnte.

Auch die Vergussflüssigkeit muss Eigenschaften und eine Beschaffenheit aufweisen, durch welche das Bilden von Hohlräumen infolge von Lufteinschlüssen weitestgehend vermieden wird; insbesondere muss diese Vergussmasse zumindest während des Einfüllens eine blasenfreie, homogene Flüssigkeit einer bestimmten Viskosität sein; sie muss sich in den oft nur durch dünne Durchgänge miteinander in Verbindung stehenden Hohlräumen der Muffe rasch und blasenfrei so verteilen, dass der vergossene Innenraum der Muffe lückenlos und frei von Unterbrechungen von der Vergussmasse völlig ausgefüllt ist.

Da die Aushärtezeit der gebräuchlicherweise verwendeten Zweikomponenten-Vergussmassen nur wenige Minuten beträgt, kann die Härterkomponente der Giessharzkomponente zeitlich nur kurz vor dem Einfüllen in die Muffe zugemischt werden. Um dies zu erleichtern, wird nach der Erfindung vorgeschlagen, dass
a) die Giessharzkomponente aus einer flüssigen Mischung aus hydroxylgruppenhaltigem Polyether, Polyester und Additiven in einem vor Gebrauch geschlossenen ersten Portionsbeutel, und
b) die Härterkomponente aus einem flüssigen aliphatischen Polyisocyanat mit weniger als 0,2 % freiem Hexamethylen-diisocyanat in einem vor Gebrauch geschlossenen zweiten Portionsbeutel
c) innerhalb eines Umhüllungsbeutels bereitgehalten werden,
d) nach Lösen der Trennklemmung der beiden Portionsbeutel deren Inhalt durch Kneten von Hand gut durchgemischt wird, bevor
e) die gut durchgemischte Vergussmasse mittels Freigabe einer Entleerungsöffnung durch Einfüllöffnungen der Vergussmuffe in diese eingeführt wird.

Durch die Erfindung wird einmal das Homogenisieren der beiden Komponenten durch Kneten von Hand beim Zusammenmischen erleichtert, und ausserdem wird der Forderung entsprochen, umweltschädliche schwer oder nicht abbaubare Stoffe zu vermeiden, so dass auch der gefahrengeneigte Strassentransport solcher Stoffe entfällt.

Bisher verwendete Härterkomponenten enthalten kennzeichnungspflichtige Stoffe, vor allem Diphenylmethandiisocyanat-(MDI)-Isomeren und daher bestehen für deren Transport und Lagerung Umweltschutzvorschriften, deren Einhaltung mit Zusatzkosten und technischen Sicherheitsbedingungen verbunden sind, welche die Handhabbarkeit (und Verfügbarkeit) beeinträchtigen können.

Bekannte Giesharz-Härter-Kompositionen erscheinen in der Regel in einer dunkeln oder schwarzen Färbung. Angestrebt wird eine hellere oder sehr geringe Färbung, und wenn erreichbar, möglichst eine Durchsichtigkeit bis zu einem gewissen Grade. Diese kann bei Anwendung der vorgeschlagenen Mischung durch das die Homogenisierung der Mischungskomponenten herbeiführende Kneten erzielt werden; dabei kann der Grad der erreichten Hellfärbung oder Durchsichtigkeit erkennen lassen, ob eine vollständige Homogenisierung erreicht worden ist. Hierzu erscheint nach der bisherigen Erfahrung eine Knetdauer von ca. 4 Minuten zur Erreichung dieses erwünschten Zustandes erforderlich. Durch die erreichte gewisse Durchsichtigkeit kann vorteilhafterweise mit dem Auge die Lage der einzelnen Adern und deren Verbindungsstellen beobachtet werden.

Ausgehend von diesen Gegebenheiten weist die Erfindung einen Weg, ein Zweikomponenten-Giessharz bereitzustellen, welches mittels einer nicht kennzeichnungspflichtigen Härterkomponente zum Ausgiesen derartiger Vergussmuffen verfügbar ist, und welches auch die bisherigen Mängel vermeidet.

Die neue Härterkomposition ist im Gegensatz zu den für diese Anwendungen bekannten Härtern wegen seiner chemischen Charakterisierung weitestgehend Schadstoffrei und daher nicht kennzeichnungspflichtig; sie kann also ohne aufwendigere Schutzmassnahmen als üblich transportiert, aufbewahrt bzw. gelagert und gehandhabt werden.

Wie bereits erwähnt, muss die Härterkomposition auch in ihren physikalischen Eigenschaften bezüglich Erstarrungstemperatur, Dichte und Viskosität relativ engen Parametern entsprechen, was auch für die weiteren Eigenschaften wie Dampfdruck, Flammpunkt und Zündtemperatur gilt. Diese erste Gruppe von Parametern, wie sie in den Patentansprüchen 3 bis 5 angegeben sind, ist massgebend für die technologischen Anforderungen an das Gemisch, damit es sich unter anderem blasenfrei und auch homogen in allen Hohlräumen der Muffe ausbreitet und diese vollständig ausfüllt.

Die weitere Gruppe von physikalischen Eigenschaften des Härters nach den Ansprüchen 6 bis 8 betrifft in erster Linie Elemente der allgemeinen Sicherheitserwartungen bei Transport, Lagerung, und dem Aufbewahren der Portionsbeutel.

Von Bedeutung ist bei der Zusammensetzung der Vergussmasse auch das Mischungsverhältnis von Giessharz- und Härterkomponente, das im stöchiometrisch richtigen Verhältnis vorliegen muss. Die Kennzahl liegt zwischen 90 und 110. Dabei liegt das bevorzugte Mischungsverhältnis zwischen 100 Gewichtsteilen Giessharz und 100 bis 120 Gewichtsteilen Härterkomponente.

Die Erfindung ist jedoch nicht auf die Anwendung beim Vergiessen einer Vergussmuffe für elektrische Kabel beschränkt, sondern auch auf das Vergiessen von Hohlräumen aller Art verwendbar, wenn diese mit Schichten versehen werden müssen, die wasser- und dampfdicht sowie durchschlagsicher sein sollen, insbesondere wenn diese mit durchgehenden elektrischen Leitern versehen sind. Dabei ist es erfindungswesentlich, dass das Zweikomponenten-Giessharz
a) als Giessharzkomponente aus einer flüssigen Mischung aus hydroxylgruppenhaltigem Polyether, Polyester und Additiven in einem vor Gebrauch geschlossenen ersten Portionsbeutel und
b) als Härterkomponente aus einem flüssigen aliphatischen Poly-isocyanat mit weniger als 0,2 % freiem Hexamethylen-diisocyanat in einem vor Gebrauch geschlossenen zweiten Portionsbeutel besteht,
c) innerhalb eines Umhüllungsbeutels bereitgehalten wird,
d) vor Gebrauch nach Lösen einer Trennklemmung zwischen den beiden Portionsbeuteln durch Kneten von Hand gut durchgemischt wird und
e) danach mittels Freigabe einer Entleerungsöffnung durch Einfüllöffnungen in den zu vergiessenden Hohlraum verfüllbar ist.

Dabei sollte das Durchkneten der Komponenten während einer Zeitdauer von wenigstens vier Minuten erfolgen.

Die verwendete Härterkomponente soll eine
A) Erstarrungstemperatur unter minus 20°C,
B) Dichte bei 20°C zwischen 1,05 und 1,25 g/cm³,
C) Viskosität bei 20°C zwischen 2000 und 4000 mPa.s aufweisen.

Ferner ist es vorteilhaft, wenn bei der Härterkomponente
D) der Dampfdruck bei 50°C kleiner als 0,00015 mbar und
E) der Flammpunkt höher als 150°C liegt, sowie
F) die Zündtemperatur bei über 400°C liegt.

Auch wird zweckmässigerweise das Mischungsverhältnis zwischen der Giessharz- und der Härterkomponente mit einer Kennzahl zwischen 90 und 110 eingehalten, wobei der Anteil der Gewichtsteile von 100 der Giessharzkomponente bei einem Gewichtsanteil von 110 bis 120 der Härterkomponente betragen kann.

Ausführungsbeispiele der erfindungsgemässen Verfahrensweise sind in der Zeichnung dargestellt und im folgenden näher beschrieben und erläutert.

Es zeigen
- Fig. 1: einen Umhüllungsbeutel 1 mit dem darin untergebrachten Beutel, der durch eine lösbare Trennklemmung 5, 5a in zwei Portionsbeutel 3 und 4 aufgeteilt ist,
- Fig. 2: das Aufschneiden des Beutels 3, 4 mittels einer Schere nach dem Kneten,
- Fig. 3: eine Muffe M mit der Einfüllöffnung 2,
- Fig. 4: einen Umhüllungsbeutel 1 mit den Portionsbeuteln 3 und 4 in abgewandelter Ausführung.

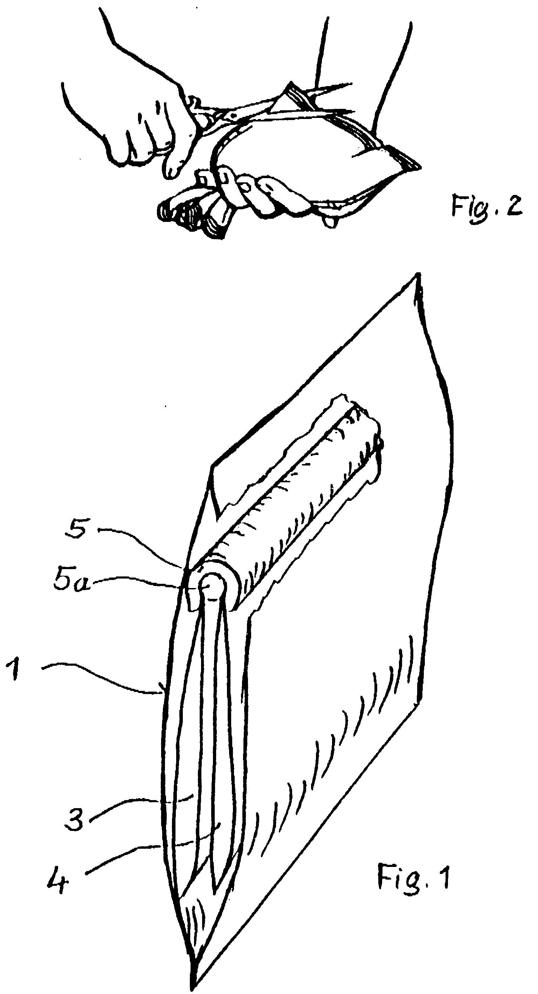

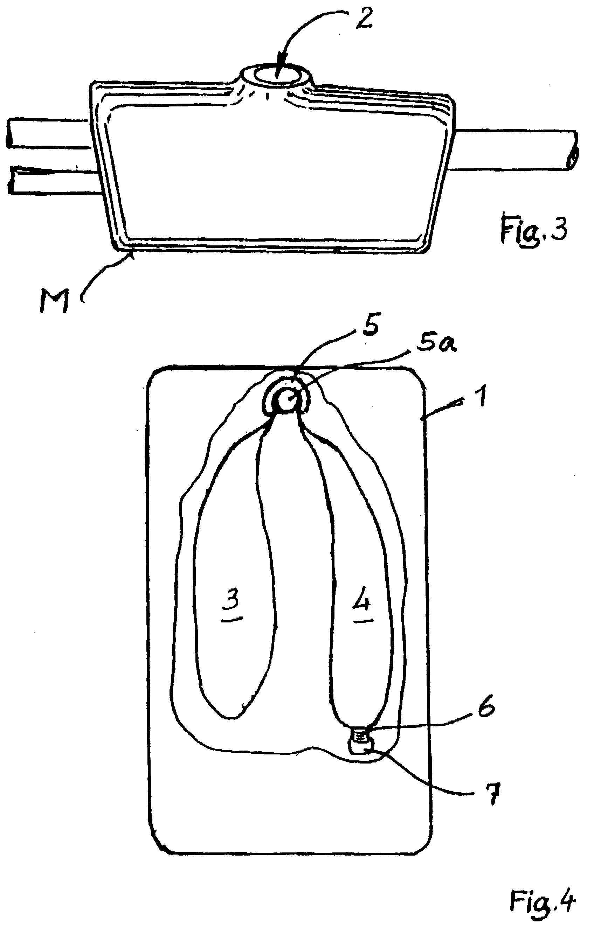

Der Umhüllungsbeutel gem. Fig. 1 dient zur Aufbewahrung und zum Schutz der beiden Portionsbeutel 3 und 4 mit den Komponenten Giessharz und Härter; die Beutel 3 und 4 sind im Ausführungsbeispiel zusammenhängend und ein einheitliches Behältnis bildend ausgeführt; sie sind nur durch die Trennklemmung 5, 5a solange voneinander getrennt, bis die Vermischung und Durchknetung erfolgen soll, also kurz vor dem Einfüllen in die Muffe. Durch Herausziehen des Dorns 5a aus der tunnelförmigen Klammer 5 werden die beiden Beutelteile 3 und 4 gegeneinander geöffnet, so dass sich Kunstharz- und Härter-Komponente vereinigen und gemischt werden können. Diese daraus entstehende Vergussmasse soll wenigstens vier Minuten geknetet werden. Darauf wird - wie aus Fig. 2 ersichtlich - mittels einer Schere eine Ecke abgeschnitten und die Masse in die Einfüllöffnung 2 - siehe Fig. 3 - der Muffe M eingefüllt.

Eine Abwandlung der Ausbildungsweise nach Fig. 1 ist beispielshaft in Fig. 4 gezeigt. Der einteilige Beutel ist mit einem Schraubverschluss 6, 7 versehen worden, wobei der Gewindeteil 6 direkt in die Einfüllöffnung 2 der Muffe M eingeführt werden kann; eine Schere oder anderes Hilfsmittel ist nicht erforderlich.

## Patentansprüche

1. Verfahren zum Vergiessen von Vergussmuffen für elektrische Kabel mit einer Zweikomponenten-Vergussmasse, deren getrennt bereitgehaltene Komponenten erst kurz vor Gebrauch vermischt und über die Einfüllöffnungen (2) der Vergussmuffe (M) in deren Hohlräume eingeführt wird,
gekennzeichnet dadurch, dass
a) die Giessharzkomponente aus einer flüssigen Mischung aus hydroxylgruppenhaltigem Polyether, Polyester und Additiven in einem vor Gebrauch geschlossenen Portionsbeutel (3), und
b) die Härterkomponente aus einem flüssigen aliphatischen Polyisocyanat mit weniger als 0,2 % freiem Hexamethylen-diisocyanat in einem vor Gebrauch geschlossenen zweiten Portionsbeutel (4)
c) innerhalb eines Umhüllungsbeutels (1) bereitgehalten werden,
d) nach Lösen einer Trennklemmung (5, 5a) der beiden Portionsbeutel (3, 4) deren Inhalt durch Kneten von Hand gut durchgemischt wird, bevor
e) die gut durchgemischte Vergussmasse mittels Freigabe einer Entleerungsöffnung durch Einfüllöffnungen (2) in den zu vergiessenden Hohlraum der Vergussmuffe (M) in diese eingeführt wird.

2. Vergussmasse zum Vergiessen von Vergussmuffen (M) für
elektrische Kabel, bestehend aus einem Zweikomponenten-Giessharz, dessen getrennt bereitgehaltene Komponenten erst kurz vor Gebrauch vermischt und über Einfüllöffnungen (2) der Vergussmuffe (M) in deren Hohlräume eingefüllt werden, bestehend aus
A) einer flüssigen Mischung aus hydroxylgruppenhaltigem Polyether, Polyester und Additiven sowie Pigmenten als Giessharzkomponente in einem vor Gebrauch geschlossenen ersten Portionsbeutel (3),
B) einem flüssigen, aliphatischen Polyisocyanat als Härterkomponente mit weniger als 0,2 % freiem Hexamethylendiisocyanat in einem vor Gebrauch geschlossenen zweiten Portionsbeutel (4), die
C) innerhalb eines Umhüllungsbeutels (1) bereitgehalten sind,
D) nach Lösen einer Trennklemmung (5, 5a) zwischen den beiden Portionsbeuteln (3, 4) gut durchmischbar und
E) als gut durchmischte Vergussmasse mittels Freigabe einer Entleerungsöffnung durch Einfüllöffnungen (2) in den zu vergiessenden Hohlraum der Vergussmuffe (M) einfüllbar sind.

3. Vergussmasse nach Anspruch 2, dadurch gekennzeichnet,
dass die Erstarrungstemperatur der Härterkomponente unter minus 20°C liegt.

4. Vergussmasse nach Anspruch 2, dadurch gekennzeichnet,
dass die Dichte der Härterkomponente bei 20°C zwischen 1,05 und 1,25 g/cm³ liegt.

5. Vergussmasse nach Anspruch 2, dadurch gekennzeichnet,
dass die Viskosität der Härterkomponente bei 20°C zwischen 2000 und 4000 mPa.s liegt.

6. Vergussmasse nach Anspruch 2, dadurch gekennzeichnet,
dass der Dampfdruck der Härterkomponente bei 50°C kleiner als 0,00015 mbar liegt.

7. Vergussmasse nach Anspruch 2, dadurch gekennzeichnet,
dass der Flammpunkt der Härterkomponente höher als 150°C liegt.

8. Vergussmasse nach Anspruch 2, dadurch gekennzeichnet,
dass die Zündtemperatur der Härterkomponente über ca. 400°C liegt.

9. Vergussmasse nach Anspruch 2, dadurch gekennzeichnet,
dass das Mischungsverhältnis zwischen der Giessharz- und der Härterkomponente mit einer Kennzahl zwischen 90 und 110 vorliegt.

10. Vergussmasse nach Anspruch 2, dadurch gekennzeichnet,
dass das Mischungsverhältnis zwischen der Giessharz- und der Härterkomponente 100 Gewichtsteile zu 110 bis 120 Gewichtsteilen beträgt.

11. Verwendung eines Zweikomponenten-Giessharzes zur Her
stellung von wasser- und dampfdichten, sowie durchschlagfesten Schichten in Hohlräumen, insbesondere mit durch diese verlegten elektrischen Leitern aller Art, wobei das Giessharz
a) als Giessharzkomponente aus einer flüssigen Mischung aus hydroxylgruppenhaltigem Polyether, Polyester und Additiven in einem vor Gebrauch geschlossenen ersten Portionsbeutel (3) und
b) als Härterkomponente aus einem flüssigen aliphatischen Polyisocyanat mit weniger als 0,2 % freiem Hexamethylendiisocyanat in einem vor Gebrauch geschlossenen zweiten Portionsbeutel (4) besteht,
c) innerhalb eines Umhüllungsbeutels (1) bereitgehalten wird,
d) vor Gebrauch nach Lösen einer Trennklemmung (5, 5a) zwischen den beiden Portionsbeuteln (3, 4) durch Kneten von Hand gut durchgemischt wird und
e) danach mittels Freigabe einer Entleerungsöffnung durch Einfüllöffnungen (2) in den zu vergiessenden Hohlraum verfüllbar ist.

12. Verwendung nach Anspruch 11, dadurch gekennzeichnet, dass
A) die Erstarrungstemperatur der Härterkomponente unter minus 20°C liegt,
B) die Dichte der Härterkomponente bei 20°C zwischen 1,05 und 1,25 g/cm³ liegt,
C) die Viskosität der Härterkomponente bei 20°C zwischen 2000 und 4000 mPa.s liegt.

13. Verwendung nach Anspruch 11 oder 12, dadurch gekennzeichnet, dass
D) der Dampfdruck der Härterkomponente bei 50°C niedriger als 0,00015 mbar liegt,
E) der Flammpunkt der Härterkomponente höher als 150°C liegt,
F) die Zündtemperatur der Härterkomponente bei über 400°C liegt.

14. Verwendung nach Anspruch 11, dadurch gekennzeichnet,
dass das Mischungsverhältnis zwischen der Giessharz- und der Härterkomponente mit einer Kennzahl zwischen 90 und 110 vorliegt.

15. Verwendung nach Anspruch 11, dadurch gekennzeichnet,
dass das Mischungsverhältnis zwischen der Giessharz- und der Härterkomponente 100 Gewichtsteile zu 110 bis 120 120 Gewichtsteilen beträgt.

## Claims

1. Method for molding electrical cable connectors by means of a two-component sealing resin of which the separately available components will be mixed only just before use and fed into their hollows through the feed openings (2) of the connector (M),
characterized in that
a) the cast-resin component consisting of a liquid mixture of polyether containing some substances of the hydroxyl group, polyester and some additives is made available in a portion bag (3), sealed before use, and
b) the accelerator component comprising a liquid aliphatic polyisocyanate with less than 0,2% free hexamethylene-diisocyanate in a second bag (4), sealed before use,
c) within an envelope (1);
and further in that
d) after loosening a separation clamp (5, 5a) of the two portion bags (3, 4), their contents will be well mixed by manual kneading, prior to
e) feeding the well-mixed resin, through the feed openings (2), into the hollow of the connector (M) to be sealed, by clearing a discharge hole.

2. Resin for molded electrical cable connectors (M) consisting of a two-component cast resin of which the separately available components will only be mixed just before use and fed into the hollows of the connector (M) through its feed openings (2), comprising
A) a liquid mixture of polyether containing some substances of the hydroxyl group, polyester and some additives as well as pigments as a cast-resin component, in a first portion bag (3), closed before use, and
B) a liquid aliphatic polyisocyanate as an accelerator component with less than 0,2% free hexamethylene-diisocyanate, in a second portion bag (4), closed before use,
C) available within an envelope (1);
D) well mixable after loosening a separation clamp (5, 5a) between the two portion bags (3, 4), and
E) feedable, as a well-mixed sealing compound, through some feed openings (2), into the hollow of the connector (M) to be sealed, by clearing a discharge hole.

3. Resin according to claim 2, characterized in that the solidification temperature of the accelerator component is lower than minus 20 centigrades.

4. Resin according to claim 2, characterized in that the density of the accelerator component ranges, at 20 centigrades, between 1,05 and 1,25 g/cm³.

5. Resin according to claim 2, characterized in that the viscosity of the accelerator component ranges, at 20 centigrades, between 2000 and 4000 mpa.

6. Resin according to claim 2, characterized in that the steam pressure of the accelerator component is, at 50 centigrades, lower than 0,00015 mbar.

7. Resin according to claim 2, characterized in that the flash point of the accelerator component is situated higher than 150 centigrades.

8. Resin according to claim 2, characterized in that the inflammation temperature of the accelerator component is higher than 400 centigrades approximately.

9. Resin according to claim 2, characterized in that the mixture ratio between the cast-resin component and the accelerator component shows an index number from 90 to 110.

10. Resin according to claim 2, characterized in that the mixture ratio of the cast-resin component and the accelerator component is between 100 weight parts and 110 to 120 weight parts.

11. Use of a two-component cast resin for the production of waterproof, steam-tight and puncture-proof layers in hollows, especially with electrical conductors of all kinds, installed in these hollow spaces and passing through same, and said resin
a) consisting, as a cast-resin component, of a liquid mixture of polyether containing matter of the hydroxyl group, of polyester and of additives, in a first portion bag (3), closed before use, and
b) as an accelerator component, of a liquid aliphatic polyisocyanate having less than 0,2% free hexamethylene-diisocyanate, in a second portion bag (4), closed before use,
c) being available within an envelope (1),
d) will be perfectly mixed by manual kneading before use, after loosening a separation clamp (5, 5a) between the two portion bags (3, 4), and
e) can be filled, through the feed openings (2), into the hollow space to be sealed, by clearing a discharge hole.

12. Use according to claim 11, characterized in that
A) the solidification temperature of the accelerator component is lower than minus 20 centigrades,
B) the density of the accelerator component at 20 centigrades will range between 1,05 and 1,25 g/cm³,
C) the viscosity of the accelerator component at 20 centigrades will range between 2000 and 4000 mpa.

13. Use according to claim 11 or 12, characterized in that
D) the steam pressure of the accelerator component at 50 centigrades is lower than 0,00015 mbar,
E) the flash point of the accelerator component exceeds 150 centigrades,
F) the inflammation temperature of the accelerator component is higher than 400 centigrades.

14. Use according to claim 11, characterized in that the mixture ratio between the cast-resin component and the accelerator component shows an index number from 90 to 110.

15. Use according to claim 11, characterized in that the mixture ratio between the cast-resin component and the accelerator component is 100 weight parts to 110 and up to 120 weight parts.

## Revendications

1. Méthode pour sceller des connecteurs de câbles électriques à l'aide d'une résine à deux composants séparément disponibles qui ne seront mélangés que directement avant leur usage, résine à introduire par les ouvertures de remplissage (2) dans les creux du connecteur (M),
caractérisée par ce que
a) le composant de résine de coulée consistant en un mélange liquide de polyéther avec des substances de groupe hydroxyle, de polyester et des additifs, dans un sac de portion (3), fermé avant l'usage, et
b) le composant d'accélérateur représentant un polyisocyanate aliphatique liquide avec moins de 0,2% hexaméthylènediisocyanate libre, dans un deuxième sac de portion (4), fermé avant l'usage,
c) seront disponibles dans une enveloppe (1), et
d) qu'après le détachement d'une pince de séparation (5, 5a) des deux sacs de portion (3, 4) dont le contenu sera bien mélangé par pétrissage à la main avant de
e) introduire la résine bien mélangée par des ouvertures de remplissage (2) dans le creux à sceller du connecteur (M) moyennant la libération d' une ouverture de vidange.

2. Résine à sceller des connecteurs (M) de câbles électriques comprenant une résine de coulée à deux composants séparément disponibles qui ne seront mélangés que direct directement avant leur usage, résine qui sera introduite par les ouvertures de remplis sage (2) dans les creux du connecteur (M), consistant en
A) un mélange liquide de polyéther contenant des substances du groupe hydroxyle, de polyester et des additifs ainsi que des pigments, en tant que composant de résine de coulée, dans un premier sac de portion (3), fermé avant l'usage, et
B) un polyisocyanate aliphatique liquide comme composant d'accélérateur avec moins de 0,2% hexaméthylènediisocyanate libre, dans un deuxième sac de portion (4), ferme avant l'usage, qui
C) seront disponibles dans une enveloppe (1);
D) pourront se mélanger bien après le détachement d'une pince de séparation (5, 5a) entre les deux sacs de portion (3, 4); et qui
E) pourront s'alimenter, comme résine bien mélangée, par des ouvertures de remplis sage (2) dans le creux à sceller du connecteur (M) grâce à la libération d'une ouverture de vidange.

3. Résine selon revendication 2, caractérisée par ce que la température de solidification du composant d'accélérateur est au-dessous de moins 20°C.

4. Résine selon revendication 2, caractérisée par ce que la densité du composant d'accélérateur à 20°C se trouve entre 1,05 et 1,25 g/cm³.

5. Résine selon revendication 2, caractérisée par ce que la viscosité du composant d'accélérateur à 20°C se trouve entre 2000 et 4000 mPa.

6. Résine selon revendication 2, caractérisée par ce que la pression de vapeur du composant d'accélérateur à 50°C est au-dessous de 0,00015 mbar.

7. Résine selon revendication 2, caractérisée par ce que le point d'éclair du composant d' accélérateur est situé plus haut que 150°C.

8. Résine selon revendication 2, caractérisée par ce que la température d'inflammation du composant d'accélérateur est située au-dessus de 400°C environ.

9. Résine selon revendication 2, caractérisée par ce que le rapport de mélange entre le composant de résine de coulée et le composant d'accélérateur présente un indice de 90 à 110.

10. Résine selon revendication 2, caractérisée par ce que le rapport de mélange entre le composant de résine de coulée et le composant d'accélérateur indique 100 parties en poids contre 110 à 120 parties en poids.

11. Usage d'une résine de coulée à deux composants pour réaliser des couches à l'épreuve de l'eau, étanches à la vapeur et résistantes au claquage dans des creux, particulièrement avec toutes sortes de conducteurs électriques y installés et passant par ces creux, et la résine de coulée comprend
a) en tant que composant de résine de coulée, un mélange liquide de polyéther contenant des substances du groupe hydroxyle, de polyester et des additifs, dans un premier sac de portion (3), fermé avant l'usage, et
b) en tant que composant d accélérateur, un polyisocyanate aliphatique liquide avec moins de 0,2% hexaméthylène-diisocyanate libre, dans un deuxième sac de portion (4), fermé avant l'usage, et cette résine
c) est disponible dans une enveloppe (1),
d) est bien mélangée par pétrissage manuel avant l'usage après avoir relâché une pince de séparation (5, 5a) entre les deux sacs de portion (3, 4), et
e) pourra s'introduire par des ouvertures de remplissage (2) dans le creux à sceller moyennant la libération d'une ouverture de vidange.

12. Usage selon revendication 11, caractérisé par ce que
A) la température de solidification du composant d'accélérateur se trouve au-dessous de moins 20°C,
B) la densité du composant d'accélérateur à 20°C est située entre 1,05 et 1,25 g/cm³,
C) la viscosité du composant d'accélérateur à 20°C est située entre 2000 et 4000 mPa.

13. Usage selon revendication 11 ou 12, caractérisé par ce que
D) la pression de vapeur du composant d'accélérateur à 50°C est plus basse que 0,00015 mbar,
E) le point d'éclair du composant d'accélérateur dépasse 150°C,
F) Sa température d'inflammation est située au-dessus de 400°C.

14. Usage selon revendication 11, caractérisé par ce que le rapport de mélange entre le composant de résine de coulée et le composant d'accélérateur présente un indice de 90 à 110.

15. Usage selon revendication 11, caractérisé par ce que le rapport de mélange entre le composant de résine de coulée et le composant d'accélérateur indique 100 parties en poids contre 110 à 120 parties en poids.
